# EUROPEAN PATENT APPLICATION

(11) **EP 4 760 435 A1**
(43) Date of publication of application: **17.06.2026**
(21) Application number: 25222387.0
(22) Date of filing: 10.12.2025
(51) Int. Cl.: G05D 1/227

(54) **ROBOTIC VEHICLE**

(30) Priority: 11.12.2024 GB 202418190
(71) Applicant: Ocado Innovation Limited, Hatfield, Hertfordshire AL10 9UL (GB)
(72) Inventor: FERENDUROS, Michael, Hatfield, Hertfordshire, AL10 9UL (GB)
(74) Representative: Ocado Group IP Department

(57) **Abstract**

There is disclosed a robotic vehicle which is capable of operating in an autonomous mode such that it can move and/or activate a lifting mechanism to lift or deposit a pallet (or similar platform) which may carry a load. The robotic vehicle may be in communication with one or more operator terminals. A signal from an operator terminal may cause the robotic vehicle to switch from the autonomous mode to a remote control mode, such that the robotic vehicle can be controlled through the operator terminal.

## Description

### FIELD OF THE DISCLOSURE

This disclosure relates generally to robotic vehicles and, more particularly, to apparatus, systems, and methods for operating robotic vehicles in an assisted drive mode.

### BACKGROUND

During operation, a robotic vehicle (or robot) may move autonomously in an environment in response to, for instance, instructions generated based on user inputs. In some instances, such as for maintenance purposes, a user may manually move the robotic vehicle by exerting force on the robotic vehicle. Such manual controls may be replaced, or supplemented by the use of a remote device to control the movement of the robotic vehicle.

During operation, a robotic vehicle may move autonomously in an environment in response to, for instance, instructions generated based on user inputs. In some instances, the robotic vehicle may be moved manually by a user for reasons such as maintenance purposes, to direct the robotic vehicle to a fiducial to enable the robotic vehicle to update position data relative to the environment, etc. Manual movement of the robotic vehicle involves the user exerting force on (e.g., pushing) the robotic vehicle to cause the robotic vehicle to move. However, some robotic vehicles are not ergonomically designed for manual movement based on their size, shape, and/or weight. Also, some robotic vehicles may be carrying a heavy load. As a result, the user may have difficulty moving the robotic vehicle manually, may risk injury when moving the robotic vehicle manually, etc.

WO2024/231519 discloses example robotic vehicles (e.g., autonomous robotic vehicles) comprising a handle control system to enable a user to maneuver the robotic vehicle by applying force to a handle of the robot. In some examples disclosed therein, the robotic vehicle switches from an autonomous drive mode to an assisted drive mode in response to force applied at the handle. In the assisted drive mode, motor(s) of the robotic vehicle facilitate movement of the robotic vehicle while the user exerts force on the handle. In some examples, the handle can be moved between a stowed position and a deployed position relative to a body of the robot. In some examples, the robotic vehicle switches to the assisted drive mode when the handle is in the deployed position.

A further example of a robotic vehicle is disclosed in US 12 466 076, the contents of which are hereby disclosed by reference, which discloses a robotic vehicle that can navigate in an autonomous mode. In the event that the ability to move autonomously is lost then an auxiliary fiducial can be generated on the screen of a mobile terminal. The auxiliary fiducial can be detected by the robotic vehicle such that the robotic vehicle follows the movement of the auxiliary fiducial. The robotic vehicle can be guided until it detects a known fixed fiducial or otherwise acquires the ability to move autonomously.

### SUMMARY

According to a first aspect of the present disclosure, there is provided a robotic vehicle comprising: a body, the body comprising a support area adapted to receive a load; a drive means configured to move the autonomous mobile robot on a surface; a lifting mechanism; a control means configured, in use, to i) control the drive means in an autonomous drive mode; ii) control the lifting mechanism to move a load to or from the support area of the body; and a network interface to receive signals from a control device, wherein, in use, the signals received from the control device are processed by the control means to control the actions of the autonomous mobile robot accordingly.

When the robotic vehicle is operating in the autonomous drive mode the control means may receive a signal comprising data indicating a destination for the robotic vehicle. For example, a user may select a destination in an environment such that the robotic vehicle moves autonomously to the selected destination.

The control means may receive a further signal indicating a task to be performed when the robotic vehicle reaches the destination. The control means may be configured to cause the lifting mechanism to autonomously lift or deposit a load when the robotic vehicle is at the indicated destination.

In one example, the lifting mechanism may comprise a fork lift mechanism. The control means may control the fork lift mechanism to lift a platform (such as a pallet) which is located at the destination. Alternatively, if the robotic vehicle is carrying a platform or pallet then the robotic vehicle may deposit the platform at the location.

Alternatively, when the robotic vehicle is operating in the remote drive mode the robotic vehicle may be moved in accordance with one or more signals received from the device. Once the robotic vehicle has been moved to a desired location then the robotic vehicle may be switched from the remote drive mode to the autonomous drive mode. Alternatively, the robotic vehicle may be operated remotely via the control device to cause the robotic vehicle to lift or to deposit a load, for example a load received on a pallet. Once the required task(s) have been completed then the control device may be used to cause the robotic vehicle to operate in the autonomous drive mode.

The robotic vehicle may further comprise a handle moveably coupled to the body wherein the control means is further configured to switch from the autonomous drive mode to an assisted drive mode in response to movement of the handle. The movement of the handle may generate a signal which is used to determine the movement of the robotic vehicle when moving in the assisted drive mode.

### BRIEF DESCRIPTION OF THE DRAWINGS

Figure 1 shows a schematic depiction of a robotic vehicle according to the present disclosure;
Figure 2 shows a schematic depiction of a robotic vehicle and an operator
Figure 3 shows a schematic depiction of an environment within which one or more robotic vehicles operate;
Figure 4 illustrates an example system comprising a robotic vehicle and assisted drive mode control circuitry for controlling movement of the robotic vehicle in accordance with teachings of this disclosure;
Figure 5 illustrates an example robotic vehicle comprising a handle in accordance with teachings of this disclosure;
Figure 6 is a flowchart representative of example machine readable instructions and/or example operations that may be executed, instantiated, and/or performed by example programmable circuitry to implement the assisted drive mode control circuitry of Figure 4; and
Figure 7 is a block diagram of an example processing platform comprising programmable circuitry structured to execute, instantiate, and/or perform the example machine readable instructions and/or perform the example operations of Figure 6.

In general, the same reference numbers will be used throughout the drawing(s) and accompanying written description to refer to the same or like parts. The figures are not necessarily to scale.

### DETAILED DESCRIPTION

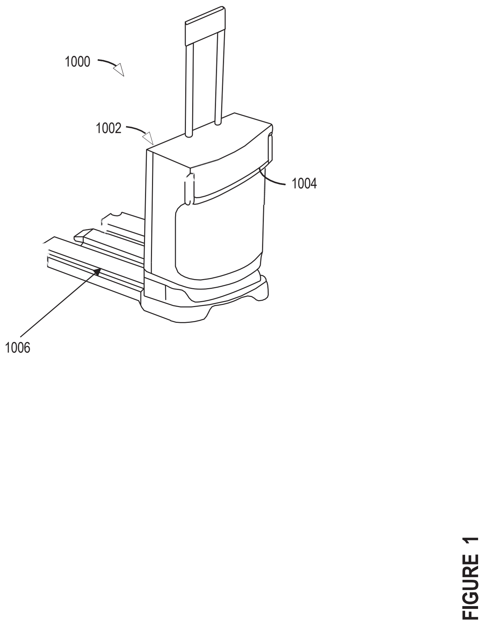

Figure 1 shows a schematic depiction of a robotic vehicle 1000 according to the present disclosure, which comprises a body 1002 and a handle 1004, the handle being movably attached to the body of the robotic vehicle. The robotic vehicle further comprises a platform support area 1006 which can be used to support a platform (for example a pallet). The robotic vehicle further comprises two forks and associated drive motors and circuitry such that the forks can be extended from the body of the robotic vehicle, inserted into a pallet, the pallet lifted and then placed on the platform support area 1006. Further details relating to such a fork-lift arrangement are disclosed in WO2024/240940 (the contents of which are hereby disclosed by reference).

In summary, the robotic vehicle is capable of operating in an autonomous drive mode. Furthermore, the autonomous drive mode may be over-ridden through the intervention of a human operator such that a terminal is used to control the operations of the robotic vehicle in a remote drive mode. The robotic vehicle may also be switched into a third drive mode by the activation of the handle 1004. In this assisted drive mode an operator may manipulate the handle, generating inputs to control circuitry which controls the movement of the robotic vehicle.

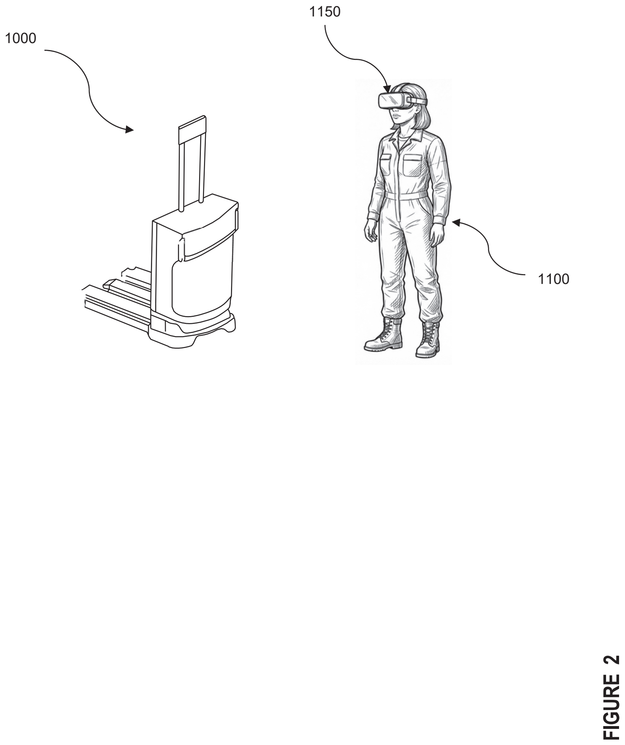

Figure 2 shows a schematic depiction of a robotic vehicle 1000 according to the present disclosure alongside a human operator 1100. The human operator is provided with a terminal 1150 which is capable of communicating with a robotic vehicle.

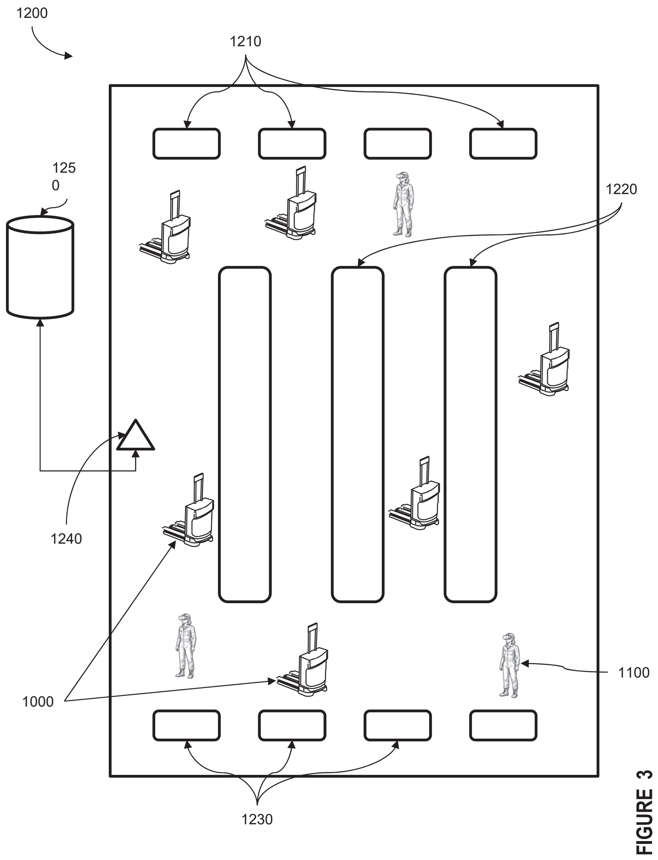

Figure 3 shows a schematic depiction of an environment 1200 which comprises a number of decant or inbound stations 1210, storage locations 1220 and outbound or packing stations 1230. In operation a plurality of robotic vehicles 1000 and one or more operators 1100 are active within the environment. In operation, the robotic vehicle will, for example: unload pallets from delivery vehicles; transport pallets to a location such that the boxes or containers carried on a pallet can be removed from the pallet; transport loaded pallets to a storage location; transport a loaded pallet from a storage location to an outbound location; load a loaded pallet onto a delivery vehicle; transport empty pallets within the environment such that they can be used elsewhere, etc. The environment may be a warehouse, a customer fulfilment centre, or other storage location.

The environment may further comprise a management system 1250 which is connected to each of the plurality of robotic vehicles 1000 and to the terminals 1150 which may be used by the one or more operators 1100. The connection is via a wireless communication network 1240, for example WiFi. The management system schedules the operation of the robotic vehicles such that product items may be: inducted into the a storage system operating within the environment; stored within the storage system; retrieved for order picking and packing processes; packed orders dispatched and loaded onto delivery vehicles, etc. In use, each of the plurality of robotic vehicles will operate for some, or all of the time, in the autonomous drive mode.

In one example, an operator may use their terminal to connect to a robotic vehicle via the wireless communication network 1240. The operator may be presented with a graphical depiction of the environment and may select a location within the graphical depiction of the environment. This will cause the robotic vehicle to which the operator terminal has connected to move autonomously to the selected location. Once the robotic vehicle has reached the selected location it may then revert to fully autonomous control, for example such that it deposits the load that is carrying or such that it lifts a load that is present at the selected location. In an alternative example, the operator my use the terminal (for example by selecting an icon on a user display or by pressing a button) to cause the robotic vehicle to deposit or pick up a load, as appropriate.

In a further example, an operator may use their terminal to connect to a robotic vehicle and then cause the robotic vehicle to switch from the autonomous drive mode to the remote drive mode. An operator may make a connection in response to receiving a message from the management system 1250 indicating that a robotic vehicle has failed to complete a task when operating in the autonomous drive mode. Alternatively, the management system may send a similar message in a scenario where previously there has been a significant failure rate from a robotic vehicle operating in the autonomous drive mode, if it is predicted that there is a unacceptable failure rate of performing a given action, etc.

The terminal may then be used to control the movement of the robotic vehicle within the environment. Once the robotic vehicle has been moved to a selected location then the operator may use the terminal to control the circuitry used to move the forks of the robotic vehicle so that a pallet may be loaded onto the robotic vehicle or unloaded from the robotic vehicle. Once the desired operations have been completed then the operator may use their terminal to switch the robotic vehicle to the autonomous drive mode. The robotic vehicle will then wait to receive instructions from the management system 1250.

Alternatively, an operator may send an instruction to cause a robot to switch into the remote drive mode. The operator may then control the fork lift mechanism of the robot, for example to deposit a load carried by the robot or to pick up a load. The operator may then use their terminal to switch the robotic vehicle to the autonomous drive mode. The robotic vehicle will then wait to receive instructions from the management system 1250.

In one example, the operator terminal 1150 may comprise a virtual reality headset. The graphical depiction of the environment may be shown as a separate image or it may be overlaid on the view provided to the operator by the virtual reality headset. Examples of virtual reality headsets which may be used are the Apple Vision Pro, Oculus Quest or similar devices. It should be understood that the reference to a virtual reality headset include similar devices such as augmented reality (AR) and mixed reality (MR) devices.

In a further example, the operator terminal 1150 may comprise a tablet computer, mobile telephone, etc. with the touchscreen display being used to show the graphical depiction of the environment. UI elements can be provided on the screen to allow an operator to control the movement and operation of the robotic vehicle. The operator terminal may also be used to interact with the management system 1250 and other robotic vehicles during the operation of the robotic vehicle within the environment.

A joypad or physical controller may be provided to enable an operator to control the movement and operation of the robotic vehicle when it is in the assisted drive mode. The joypad or physical controller may communicate directly with the robotic vehicle. Alternatively, the joypad or physical controller may have be connected to the operator terminal (for example via a Bluetooth connection) and the control instructions may be routed to the robotic vehicle via the operator terminal1150.

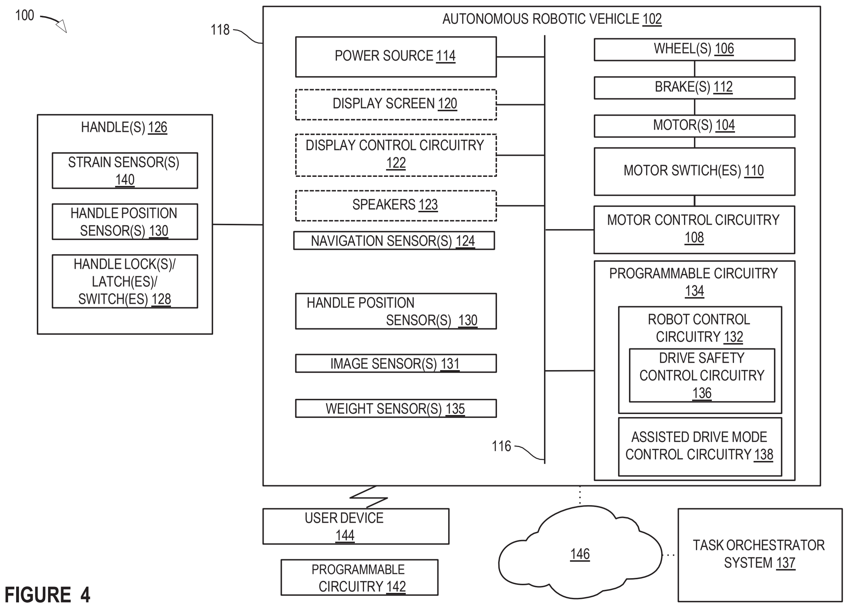

Figure 4 illustrates an example system 100 for controlling movement of an autonomous robotic vehicle 102 in an autonomous drive mode, a remote drive mode or an assisted drive mode in accordance with teachings of this disclosure. The autonomous robotic vehicle 102 of Figure 4 can include, for example, a cart comprising a storage area (e.g., bin(s), shelve(s), fork(s)) for carrying inventory (e.g., one or more objects) retrieved from a storage location in a warehouse or other environment. Although examples disclosed herein discussed in connection with autonomous robotic vehicles, examples disclosed herein could be used with other types of robotic vehicles. The robotic vehicle 102 discussed with reference to Figure 4 may be the robotic vehicle 1000 discussed above with reference to Figure 3.

The example autonomous robotic vehicle 102 of Figure 4 includes one or more motors 104 (e.g., electric motor(s) and/or other means for driving movement of the robotic vehicle 102 via wheel(s) 106 of the robotic vehicle 102). The example robotic vehicle 102 includes motor control circuitry 108 and one or more motor switches 110 to control operation of the motor(s) 104. The motor control circuitry 108 includes electronics (e.g., hardware and software component(s)) to control, for example, a speed of the robotic vehicle 102. The motor switches 110 can control a flow of current to the motor(s) 104 based on, for example, instructions generated by the motor control circuitry 108. The example robotic vehicle 102 includes brake(s) 112, or more generally, braking mechanism(s) that serve as means for slowing or stopping movement of the robotic vehicle 102.

In some examples, the robotic vehicle 102 of Figure 4 includes a display screen 120 to present content to a user of the robotic vehicle 102. In some examples, the display screen 120 is a touch screen to enable the user to interact with data presented on the display screen 120 by touching the screen 120. A display control circuitry 122 (e.g., a graphics processing unit (GPU)) of the example robotic vehicle 102 of Figure 4 controls operation of the display screen 120 and facilitates rending of content (e.g., display frame(s) associated with graphical user interface(s)) via the display screen 120. In some examples, the robotic vehicle 102 includes speaker(s) 123 to provide audio outputs. The robotic vehicle 102 of Figure 4 includes a power source 114 such as a battery to provide power to the motor(s) 104 and other components of the robotic vehicle 102 communicatively coupled via a bus 116. A body, housing, or frame 118 of the robotic vehicle 102 carries, contains, encloses, and/or otherwise supports electrical component(s) of the robotic vehicle 102 that enable operation of the robotic vehicle 102.

The example robotic vehicle 102 of Figure 4 includes one or more handle(s) 126, or means for guiding the robotic vehicle 102. As disclosed herein, in some examples, the handle(s) 126 are separately coupled to the body 118 of the robotic vehicle 102 and/or separately movable relative to the body 118. For instance, the handle(s) 126 can move between a stowed (e.g., folded, retracted) state and a deployed (e.g., unfolded, extended) state relative to the robotic vehicle body 118. In some examples, the handle(s) 126 include lock(s), latch(es), and/or switch(es) 128 to secure or otherwise maintain the handle(s) 126 in the stowed position. In some examples, the handle(s) 126 include handle position sensor(s) 130 to output signal(s) indicative of movement of portion(s) of the handle(s) 126 (e.g., to indicate a change in position of the handle(s) from the stowed position to the deployed position). In some examples, the handle position sensor(s) 130 output signal(s) indicating a change of state of the lock(s), latch(es), or switch(es) 128 (e.g., to indicate that handle(s) 126 have been released from the lock(s) 128, a state of the switch 128 has been changed to release the handle 126, etc.). Additionally or alternatively, a user can press a button or an input at the display screen 120 to release the handle(s) 126. In some examples, the handle position sensor(s) 130 are additionally or alternatively carried by (e.g., coupled to) the body 118 of the robotic vehicle 102. For instance, the handle position sensor(s) 130 carried by the robotic vehicle body 118 can include proximity sensor(s) to output signal(s) indicative of a proximity of one or more portions of the handle(s) 126 to the body of the robotic vehicle 102, thereby indicating that the handle(s) 126 are in the stowed position.

The example robotic vehicle 102 includes a robotic vehicle control circuitry 132 to control movement of the autonomous robotic vehicle 102. In the example of Figure 4, the robotic vehicle control circuitry 132 is implemented by programmable circuitry 134 of the robotic vehicle 102. The example robotic vehicle control circuitry 132 of Figure 4 controls autonomous movement or locomotion of the robotic vehicle 102 in a first drive mode, or an autonomous drive mode. In the autonomous drive mode, the robotic vehicle 102 moves to a location in an environment without or with limited user input control at the robotic vehicle 102 during movement of the robotic vehicle 102.

When the robotic vehicle 102 is in the autonomous drive mode, the robotic vehicle control circuitry 132 generates instructions to, for example, control travel of the robotic vehicle 102 along a travel path to a location in an environment including the robotic vehicle 102. For example, the robotic vehicle control circuitry 132 generates instructions to cause the robotic vehicle 102 to turn, travel forward, adjust speed, etc. The robotic vehicle control circuitry 132 defines a travel trajectory for the robotic vehicle 102 when the robotic vehicle 102 is operating in the autonomous drive mode. The instructions generated by the robotic vehicle control circuitry 132 can be transmitted to, for instance, the motor control circuitry 108. The robotic vehicle control circuitry 132 includes drive safety control circuitry 136 that performs obstacle detection during travel of the robotic vehicle 102, causes the robotic vehicle 102 to perform maneuvers for collision avoidance, etc. The robotic vehicle control circuitry 132 transmits the instructions with respect to autonomous movement (e.g., locomotion) of the robotic vehicle 102 to the motor control circuitry 108 to cause the motor(s) 104 to move the robotic vehicle 102.

The example autonomous robotic vehicle 102 of Figure 4 includes sensor(s) to provide information to the robotic vehicle control circuitry 132 with respect to, for example, a location of the robotic vehicle 102 in the environment (e.g., the warehouse), an orientation of the robotic vehicle 102 in the environment, a proximity of the robotic vehicle 102 (e.g., the body 118 of the robotic vehicle 102) relative to external object(s) in the environment (e.g., to detect a potential collision), and/or other properties of the robotic vehicle 102 (e.g., whether the robotic vehicle 102 is carrying a load). For example, the robotic vehicle 102 can include navigation sensor(s) 124 such as a satellite-based geographical positioning system (e.g., a global position system (GPS)), optical sensor(s), and/or other types of sensors. The robotic vehicle control circuitry 132 analyzes data from the navigation sensor(s) 124 to, for example, adjust a trajectory of the robotic vehicle 102 and generate corresponding instructions based on the outputs of the sensor(s) 124. In some examples, the robotic vehicle 102 includes image sensor(s) 131 to generate image(s) of the surrounding environment during operation of the robotic vehicle 102. The robotic vehicle control circuitry 132 can analyze image data (e.g., using computer vision) output by the image sensor(s) 131 to, for instance, recognize object(s) in the environment, determine a location of the robotic vehicle 102, etc. In some examples, the robotic vehicle 102 includes weight sensor(s) 135 to measure, for example, a weight of a load carried by the robotic vehicle 102 at a given time. In some examples, the robotic vehicle control circuitry 132 determines a speed of the robotic vehicle 102 based on the weight of the load carried by the robotic vehicle 102.

The robotic vehicle control circuitry 132 can generate the instructions to cause the robotic vehicle 102 to move based on, for example, instructions received from a task orchestrator system 137 in communication with the robotic vehicle control circuitry 132. The task orchestrator system 137 can manage workflows for the robotic vehicle 102 and/or other robotic vehicles in the environment, can assign user(s) (e.g., operator(s)) to perform task(s) in connection with the robot(s) 102, etc. As illustrated in Figure 4, the robotic vehicle control circuitry 132 can wirelessly communicate with the task orchestrator system 137 (e.g., via cloud-based device(s) 146). In some examples, the robotic vehicle control circuitry 132 additionally or alternatively generates the instructions to cause the robotic vehicle 102 to move based on inputs received at the robotic vehicle 102 (e.g., via the display screen 120). For example, an instruction from the task orchestrator system 137 and/or a user input at the robotic vehicle 102 can indicate an object to be retrieved from a warehouse in which the robotic vehicle 102 disposed. The example robotic vehicle control circuitry 132 of Figure 4 can determine a trajectory of the robotic vehicle 102 to the location of the object in the warehouse based on, for instance, previously defined rule(s) indicating a location of the object in the warehouse.

The autonomous robotic vehicle 102 can also operate in a second drive mode, or a manual drive mode. In the manual drive mode, the motor switch(es) 110 disable operation of the motor(s) 104. The user causes the robotic vehicle 102 to move by exerting force (e.g., muscle power) on the body 118 and/or on the handle(s) 126 to push or pull the robotic vehicle 102, thereby causing the robotic vehicle 102 to move. For instance, in the manual drive mode, the wheel(s) 106 rotate about their respective axes to enable the user to move (e.g., push) the robotic vehicle 102.

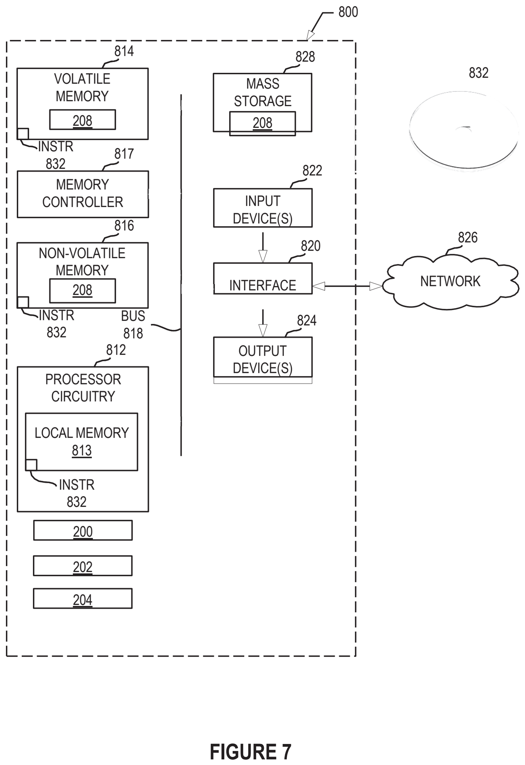

Although in examples disclosed herein the assisted drive mode control circuitry 138 is discussed as implemented by programmable circuitry (e.g., machine-readable instructions executed by the programmable circuitry 134), the assisted drive mode circuitry 138 can additionally or alternatively be implemented as hardware for detecting force at the handle(s) 126 and cause the motor(s) 104 to provide outputs. Thus, examples disclosed herein may be implemented in hardware, software, or combinations thereof. In one example, the assisted drive mode control circuitry 138 of Figure 4 may be instantiated by programmable circuitry such as the example programmable circuitry 812 of Figure 7.

When an appropriate signal is received from an operator terminal then the robot will switch from the autonomous drive mode to the remote drive mode. The motor control circuitry and the robot control circuitry will then be activated in response to the signals received from the operator terminal such the robot is controlled remotely by an operator. When there is no further need for the robot to be controlled remotely then the then the operator terminal may transmit a signal which causes the robot to switch from the remote drive mode to the autonomous drive mode.

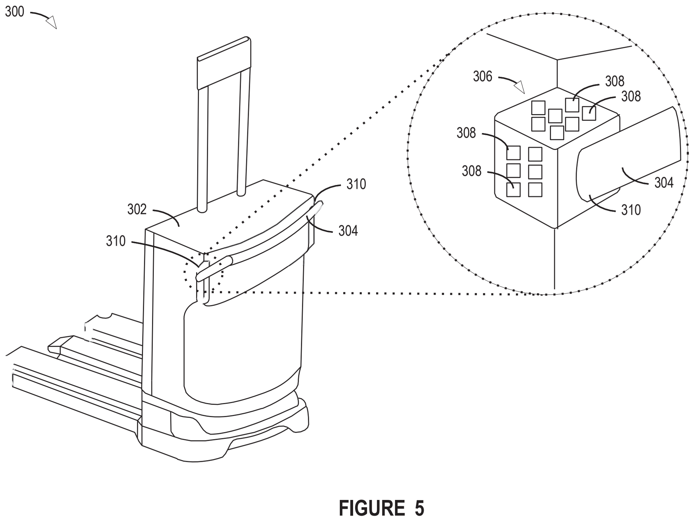

Figure 5 illustrates an example robotic vehicle 300 in accordance with teachings of this disclosure. The example robotic vehicle 300 of Figure 5 has a form factor resembling a pallet jack truck. However, the example robotic vehicle 300 can have other form factors, such as a shopping cart design with one or more storage bins. The example robotic vehicle 300 of Figure 5 includes a body 302 and a handle 304 coupled to the body 302. As shown in Figure 5, the handle 304 resembles the handle of, for example, a shopping cart, in that the handle 304 has a length extending relative to a width of at least a portion of the body 302. The assisted drive mode of the robotic vehicle may be accessed by an operator applying a force to the handle. The operator input(s) may be interpreted by the assisted drive mode control circuitry such that the robot is moved in a accordingly.

The handle 304 may include malleable material such as an elastomer, a soft metal, etc. One or more strain sensors may be provided within the handle. In one example, the handle 304 includes two sensor arrays 306 comprising strain sensors 308. The sensor arrays 306 may be located at opposing ends 310 of the handle. One of the sensor arrays 306 is shown in an expanded view in Figure 5. As shown in Figure 5, the sensor array 306 is defined by a plurality of strain sensors 308.The strain sensors 308 detect tension or compression resulting from force applied by the user on the malleable portion(s) of the handle 304. In some examples, the handle 304 may be rigid, but an interface between the handle 304 and the body 302 of the robotic vehicle 300 may include a malleable material to accommodate the sensors 308 to detect force on the handle 304. The implementation of an assisted drive mode is discussed in greater detail in WO2024/231519.

As discussed above, the robot switches into the assisted drive mode when an operator applies a force to the handle of the robot. The robot may switch from the assisted drive mode to the autonomous drive mode if there is no operator input on the handle for a predetermined period of time. Alternatively, a command may be sent from an operator terminal such that the robot switches from the assisted drive mode to the autonomous drive mode (or from the assisted drive mode to the remote drive mode).

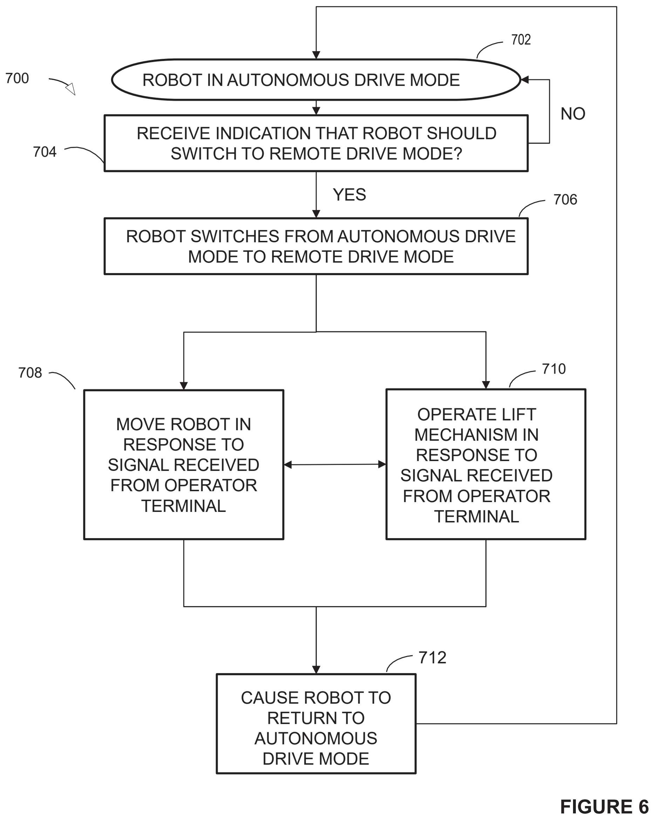

Figure 6 shows a schematic depiction of a method 700 which describes how a robotic vehicle according to the present disclosure can operate in either the autonomous drive mode or the remote drive mode. At 702, the robotic vehicle is operating in the autonomous drive mode. The robot control circuitry monitors received communications from an operator terminal. If no communication has been received then the robotic vehicle will continue to operate in the autonomous drive mode. If the robotic vehicle does receive an indication at 704 then the robot will switch from the autonomous drive mode to the remote drive mode at 706.

The robotic vehicle will then be controlled by the operator. Depending on the location and/or orientation of the robotic vehicle within the environment and/or the tasks that the robotic vehicle needs to perform the operator may control the movement of the robotic vehicle at 708. Alternatively, the operator may use the operator terminal to control the lift mechanism of the robotic vehicle at 710. It should be understood that it may be necessary for the operator to perform a sequence of operations, alternating between causing the robotic vehicle to move and operating the lift mechanism as required. Once all of the necessary operations have been instructed, the operator can send a control signal to the robotic vehicle (712) such that it returns to operating in the autonomous drive mode 702.

Figure 7 is a block diagram of an example programmable circuitry platform 800 structured to execute and/or instantiate the example machine-readable instructions and/or the example operations of Figure 6 to implement the motor control circuitry 108 and programmable circuitry 134 of Figure 4. The programmable circuitry platform 800 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, or any other type of computing and/or electronic device. If the robotic vehicle does receive a

The programmable circuitry platform 800 of the illustrated example includes programmable circuitry 812. The programmable circuitry 812 of the illustrated example is hardware. For example, the programmable circuitry 812 can be implemented by one or more integrated circuits, logic circuits, FPGAs, microprocessors, CPUs, GPUs, DSPs, and/or microcontrollers from any desired family or manufacturer. The programmable circuitry 812 may be implemented by one or more semiconductor based (e.g., silicon based) devices. In this example, the programmable circuitry 812 implements the example drive mode selector circuitry 200, the example force detection circuitry 202, and the example movement control circuitry 204.

The programmable circuitry 812 of the illustrated example includes a local memory 813 (e.g., a cache, registers, etc.). The programmable circuitry 812 of the illustrated example is in communication with main memory 814, 816, which includes a volatile memory 814 and a non-volatile memory 816, by a bus 818. The volatile memory 814 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non- volatile memory 816 may be implemented by flash memory and/or any other desired type of memory device. Access to the main memory 814, 816 of the illustrated example is controlled by a memory controller 817. In some examples, the memory controller 817 may be implemented by one or more integrated circuits, logic circuits, microcontrollers from any desired family or manufacturer, or any other type of circuitry to manage the flow of data going to and from the main memory 814, 816.

The programmable circuitry platform 800 of the illustrated example also includes interface circuitry 820. The interface circuitry 820 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCle) interface.

In the illustrated example, one or more input devices 822 are connected to the interface circuitry 820. The input device(s) 822 permit(s) a user (e.g., a human user, a machine user, etc.) to enter data and/or commands into the programmable circuitry 812. The input device(s) 822 can be implemented by, for example, an audio sensor, a microphone, a camera (still or video), a keyboard, a button, a mouse, a touchscreen, a trackpad, a trackball, an isopoint device, and/or a voice recognition system.

One or more output devices 824 are also connected to the interface circuitry 820 of the illustrated example. The output device(s) 824 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 820 of the illustrated example, thus, typically includes a graphics driver card, a graphics driver chip, and/or graphics processor circuitry such as a GPU.

The interface circuitry 820 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 826. The communication can be by, for example, an Ethernet connection, a digital subscriber line (DSL) connection, a telephone line connection, a coaxial cable system, a satellite system, a beyond-line-of-site wireless system, a line-of-site wireless system, a cellular telephone system, an optical connection, etc.

The programmable circuitry platform 800 of the illustrated example also includes one or more mass storage discs or devices 828 to store firmware, software, and/or data. Examples of such mass storage discs or devices 828 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 832, which may be implemented by the machine readable instructions of Figure 10, may be stored in the mass storage device 828, in the volatile memory 814, in the non-volatile memory 816, and/or on at least one non-transitory computer readable storage medium such as a CD or DVD which may be removable.

It should be understood that the different elements discussed above as being instantiated by programmable circuitry such as the example programmable circuitry 812 of Figure 7 may be instantiated by known equivalents, including hardware elements, software and/or a combination of the hardware and software.

In one respect, there is disclosed a robotic vehicle which is capable of operating in an autonomous mode such that it can move and/or activate a lifting mechanism to lift or deposit a pallet (or similar platform) which may carry a load. The robotic vehicle may be in communication with one or more operator terminals. A signal from an operator terminal may cause the robotic vehicle to switch from the autonomous mode to a remote control mode, such that the robotic vehicle can be controlled through the operator terminal.

## Claims

1. A robotic vehicle comprising:
a body, the body comprising a support area adapted to receive a load;
a drive means configured to move the autonomous mobile robot on a surface;
a lifting mechanism;
a control means configured, in use, to
i) control the drive means in an autonomous drive mode;
ii) control the lifting mechanism to move a load to or from the support area of the body; and
a network interface to receive signals from a control device, wherein, in use, the signals received from the control device are processed by the control means to control the actions of the autonomous mobile robot accordingly.

2. A robotic vehicle according to claim 1, in which the signal received from the control device causes the control means to select a drive mode of the robotic vehicle.

3. A robotic vehicle according to claim 2, in which the signal received from the control device causes the robotic vehicle to switch between the autonomous drive mode and a remote drive mode.

4. A robotic vehicle according to claim 3, such that when the robotic vehicle is operating in the autonomous drive mode the control means can receive data indicating a destination for the robotic vehicle.

5. A robotic vehicle according to claim 4, wherein the control means activates the drive means such that the robotic vehicle moves autonomously to the indicated destination.

6. A robotic vehicle according to claim 5, wherein the control means receives a further signal indicating a task to be performed when the robotic vehicle reaches the indicated destination.

7. A robotic vehicle according to claim 5, wherein the control means is further configured to cause the lifting mechanism to lift or to deposit a load when the robotic vehicle is at the indicated destination.

8. A robotic vehicle according to claim 3, such that when the robotic vehicle is operating in a remote drive mode the robotic vehicle is moved in accordance with one or more signals received from the control device.

9. A robotic vehicle according to claim 3, wherein the robotic vehicle further comprises a handle moveably coupled to the body wherein the control means is further configured to switch from the autonomous drive mode to an assisted drive mode in response to movement of the handle.

10. A robotic vehicle according to claim 9, wherein the movement of the handle generates a signal which is used to determine the movement of the robotic vehicle.
